## Europäisches Patentamt

## European Patent Office

## Office européen des brevets

(19)

(11) Veröffentlichungsnummer: **0 020 876**
**B1**

(12) **EUROPÄISCHE PATENTSCHRIFT**

(45) Veröffentlichungstag der Patentschrift:
22.08.84

(21) Anmeldenummer: 80101675.9

(22) Anmeldetag: 28.03.80

(51) Int. Cl.³: **G 01 J 3/42**

(30) Priorität: 15.06.79 DE 2924132

(43) Veröffentlichungstag der Anmeldung:
07.01.81 Patentblatt 81/1

(45) Bekanntmachung des Hinweises auf die Patenterteilung:
22.08.84 Patentblatt 84/34

(84) Benannte Vertragsstaaten:
DE FR GB IT

(56) Entgegenhaltungen:
GB - A - 2 000 283
US - A - 4 030 829
US - A - 4 069 420
US - A - 4 076 424

(54) Signalverarbeitungsschaltung.

(73) Patentinhaber: **Bodenseewerk Geosystem GmbH, Alte Nussdorfer Strasse 15, D-7770 Überlingen/Bodensee (DE)**

(72) Erfinder: **Tilman, Philip Spaeth, Dipl.-Ing., Am Häslerain 22, D-7767 Sipplingen (DE)**

(74) Vertreter: **Wolgast, Rudolf, Dr. et al, Bökenbusch 41 Postfach 11 03 86, D-5620 Velbert 11 Langenberg (DE)**

**Beschreibung**

Die Erfindung betrifft eine Signalverarbeitungsschaltung zur Verarbeitung des Ausgangssignals eines trägen und/oder mit einem Gedächtniseffekt behafteten Detektors, der von einer Messgrösse beaufschlagt ist, die in periodisch aufeinanderfolgenden Mess- und Referenzzeitintervallen jeweils einen Mess- bzw. einen Referenzwert annimmt, mit

a) einem rücksetzbaren Integrator zur Integration des Ausgangssignals des Detektors jeweils über jedes Mess- und jedes Referenzzeitintervall,

b) einer ersten sowie einer zweiten mit dem Ausgang des Integrators verbindbaren Speicherschaltung,

c) einer Ablaufsteuerung zur Steuerung der Rücksetzung des Integrators sowie der Verbindung der ersten bzw. zweiten Speicherschaltung mit dem Integrator.

Die Erfindung ist besonders anwendbar bei Detektoren, die im mittel- bis langwelligen Infrarot empfindlich sind und abwechselnd von einem Mess- und einem Referenzstrahlenbündel beaufschlagt werden. Ein Beispiel für die Anwendung eines solchen Detektors ist ein Bifrequenz-Photometer zur Bestimmung der Konzentration eines absorbierenden Gases in einer Küvette. Bei einem solchen Bifrequenz-Photometer wird die Küvette von einem Strahlengang durchsetzt, der von einer Lichtquelle ausgeht und auf einen Detektor geleitet wird. In diesem Strahlengang sitzt eine rotierende Filterscheibe, die abwechselnd zwei verschiedene Wellenlängen oder Frequenzen durchlässt. Dabei fällt die eine durchgelassene Wellenlänge mit einer Absorptionsbande einer gesuchten Verbindung zusammen, während die andere Wellenlänge ausserhalb der Absorptionsbande liegt und eine Berücksichtigung der Untergrundabsorption, von Änderungen der Lichtquellenhelligkeit oder der Detektorempfindlichkeit gestattet. Bei einigen Substanzen, z.B. Uranhexafluorid, liegt die wesentliche Absorptionsbande, die für eine Messung ausnutzbar ist, im mittel- bis langwelligen Infrarot. Es muss daher das eine Filter in diesem Bereich durchlässig sein, und der Detektor muss auf solche Strahlung ansprechen.

Dabei tritt die Schwierigkeit auf, dass Detektoren dieser Art mit Trägheit und Gedächtnis behaftet sind. Das bedeutet, dass der Detektor dem Anstieg der Strahlungsenergie nur verzögert mit seinem Ausgangssignal folgt, während anderseits das Ausgangssignal des Detektors nach Abfall der Strahlungsenergie mit Verzögerung wieder abklingt. Ausserdem sind solche Detektoren sehr empfindlich gegen Schwankungen der Umgebungstemperatur. Schliesslich stellt die Eigenstrahlung der Geräteteile, z.B. der Küvettenwandung, einen Strahlungsanteil, welcher nicht mit der Filterwechselfrequenz moduliert wird, sich aber langsam, z.B. in Abhängigkeit von der Umgebungstemperatur, ändern kann.

Durch diese Eigenschaften des Detektors laufen die von den beiden Messgrössen, also beispielsweise von Mess- und Referenzlichtbündel herrührenden Signale ineinander. Überlagert sind Störsignale, die von Schwankungen der Umgebungstemperatur herrühren.

Es ist eine Signalverarbeitungsschaltung für ein Bifrequenz-Photometer der vorerwähnten Art bekannt, bei welcher das Detektorsignal durch einen Integrator während vorgegebener, je einer der alternierenden Messgrössen zugeordneter Referenz- bzw. Messzeitintervalle integriert wird. Es sind dort auch Massnahmen getroffen worden, um die von den beiden alternierenden Messgrössen herrührenden Signale zu «entfalten» (DE-A-2 727 976). Diese Massnahmen sind jedoch nur in einem Punkt des Messbereichs wirksam, während in dem Rest des Messbereichs, also des Bereichs von Intensitätsverhältnissen von Mess- und Referenzstrahlenbündel, keine saubere Trennung der Signale erfolgt. Das macht das bekannte Gerät für viele Anwendungen ungeeignet. Bei bestimmten Anwendungen wird beispielsweise von einem Bifrequenz-Photometer verlangt, dass es noch eine saubere Messung liefert, wenn die Intensität des Messstrahlenbündels nur noch 3% der Intensität des Referenzstrahlenbündels beträgt. Unter solchen Bedingungen bringt eine unsaubere Trennung der Signalanteile, wenn also ein Prozentsatz des starken Referenzlichtbündels sich auf das Signal des Messlichtbündels auswirkt, erhebliche Messfehler mit sich.

Der Erfindung liegt die Aufgabe zugrunde, für solche Anwendungen eine Signalverarbeitungsschaltung der eingangs definierten Art so auszubilden, dass sie eine saubere Trennung der von den beiden alternierenden Messgrössen herrührenden Signale gewährleistet.

Erfindungsgemäss wird diese Aufgabe dadurch gelöst, dass

d) eine Klemmschaltung vorgesehen ist, mit der das Ausgangssignal des Detektors an eine Nullinie anklemmbar ist, bevor es dem Integrator zugeführt wird,

e) der Ausgang der Klemmschaltung mit dem Integrator entweder direkt über einen ersten Schalter oder über einen mit einem invertierenden Verstärker in Reihe liegenden zweiten Schalter verbindbar ist,

f) die Ablaufsteuerung zur Erzeugung folgender Steuersignale ausgebildet ist:

(i) eines ersten Steuersignals zum Schliessen des ersten Schalters jeweils während der in zeitlichem Abstand aufeinanderfolgenden Mess- und Referenzzeitintervalle,

(ii) eines zweiten Steuersignals zum Schliessen des zweiten Schalters vor jedem Mess- und vor jedem Referenzzeitintervall jeweils für ein vorgegebenes Kompensationszeitintervall,

(iii) eines dritten Steuersignals zur Aktivierung der Klemmschaltung jeweils vor jedem Mess-, jedem Referenz- und jedem Kompensationszeitintervall,

(iv) eines vierten Steuersignals zur Veranlassung der Übernahme des Ausgangssignals des Integrators in die erste Speicherschaltung nach jedem Messzeitintervall und in die zweite Speicherschaltung nach jedem Referenzzeitintervall,

(v) eines fünften Steuersignals zur Rücksetzung des Integrators jeweils nach Übernahme seines Ausgangssignals in eine der Speicherschaltungen.

Die Ablaufsteuerung definiert ein Zeitintervall, in welchem überwiegend die eine Messgrösse wirksam ist, und ein zweites Zeitintervall, in welchem überwiegend die andere Messgrösse wirksam ist. Diese beiden Zeitintervalle sollen nachstehend als «Referenzfenster» und «Messfenster» bezeichnet werden. Die Messung jeder Messgrösse erfolgt durch Integration des Signals über ein Referenzzeitintervall, welches innerhalb des Referenzfensters liegt, bzw. über ein Messzeitintervall, welches innerhalb des Messfensters liegt. Im Referenzfenster treten jedoch Signalanteile auf, die von der innerhalb des Messfensters gemessenen Messgrösse herrühren und umgekehrt. Aus diesem Grunde wird vor der Messung der einen Messgrösse durch Integration im Referenzzeitintervall das Signal während eines Kompensationszeitintervalls mit umgekehrtem Vorzeichen integriert. Ebenfalls erfolgt eine Integration mit umgekehrtem Vorzeichen während eines Kompensations-Zeitintervalls vor dem Messzeitintervall. Vor jedem Integrationsintervall wird das Detektorsignal jeweils durch eine Klemmschaltung an eine Nullinie «geklemmt». Die Form des Signalverlaufs am Detektor bei einem vorgegebenen, beispielsweise dreieckigen, Signalverlauf der Messgrössen hat unabhängig von den Amplituden der Messgrössen stets den gleichen Charakter. Das während des Kompensations-Zeitintervalls gebildete Integral des Detektorsignals steht daher in einem festen Verhältnis zu dem über das Mess- oder Referenzzeitintervall gebildeten Integral des von der jeweils anderen Messgrösse herrührenden Signalanteils. Wenn daher die Aufschaltung des Detektorsignals während der Kompensations-Zeitintervalle und die Länge der Kompensations-Zeitintervalle im Verhältnis zu den entsprechenden Grössen der Referenz- und Messzeitintervalle geeignet gewählt sind, wird durch die mit entgegengesetzten Vorzeichen erfolgenden Integrationen jeweils der Einfluss der einen Messgrösse auf die Messung der anderen und umgekehrt eliminiert.

Der Signalverlauf am Detektor bei einem z.B. dreieckigen Verlauf der am Detektor wirksamen Messgrösse ist bei üblichen Detektoren sehr unregelmässig und bei gleichem Charakter von Detektor zu Detektor verschieden. Die Aufschaltung der Signale während der verschiedenen Zeitintervalle auf den Integrator muss daher für jeden Detektor speziell eingestellt werden.

In weiterer Ausbildung der Erfindung ist daher vorgesehen, dass dem Detektor ein Filter nachgeschaltet ist, dessen Übertragungsfunktion invers zur Übertragungsfunktion des Detektors ist.

Auch mit einem solchen Filter allein könnte eine Entfaltung der Signale erreicht werden. Bei Verwendung eines solchen Filters allein wäre jedoch ebenfalls eine genaue Anpassung des Filters an die Eigenschaften des jeweiligen Detektors erforderlich.

Es hat sich jedoch gezeigt, dass bei Kombination der eingangs geschilderten Schaltung mit einem vorgeschalteten Filter, dessen Übertragungsfunktion invers zur Übertragungsfunktion des Detektors ist, praktisch keine Justage zur Anpassung an die speziellen Parameter des Detektors erforderlich ist.

Weitere Ausgestaltungen der Erfindung sind Gegenstand der Unteransprüche 3 bis 7.

Die Erfindung ist nachstehend an einem Ausführungsbeispiel unter Bezugnahme auf die zugehörigen Zeichnungen näher erläutert:

Fig. 1 zeigt ein vereinfachtes Schaltbild einer erfindungsgemässen Signalverarbeitungsschaltung.

Fig. 2 zeigt das Impulsdiagramm der Ablaufsteuerung, durch welche die Signalverarbeitungsschaltung nach Fig. 1 steuerbar ist.

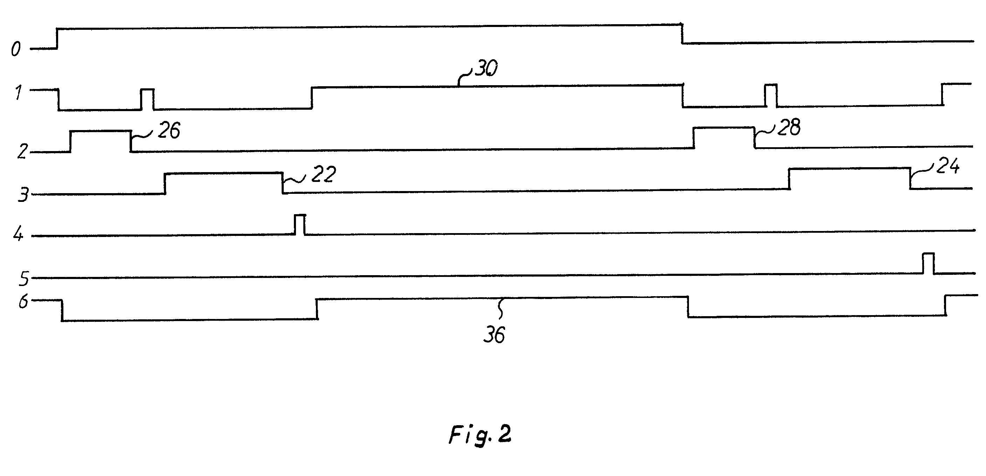

Die Signalverarbeitungsschaltung enthält einen Integrator 10, durch welchen das Detektorsignal von einem Detektor 12 während vorgegebener, je einer von zwei alternierenden Messgrössen zugeordneter Referenz- bzw. Messzeitintervalle integriert wird. Es ist eine durch eine Ablaufsteuerung 14 gesteuerte Klemmschaltung 16 für das Detektorsignal vorgesehen. Das Ausgangssignal der Klemmschaltung 16 wird über einen durch die Ablaufsteuerung 14 gesteuerten ersten Schalter 18 als invertiertes Detektorsignal und über einen ebenfalls durch die Ablaufsteuerung 14 gesteuerten zweiten Schalter 20 als nichtinvertiertes Detektorsignal auf den Integrator 10 aufgeschaltet. (Die Klemmschaltung 16 bewirkt schon eine Inversion des Signals.) Es ist hier und im folgenden von «Schaltern» die Rede, und in der Zeichnung sind der Anschaulichkeit halber mechanische Schalter dargestellt. In der Praxis werden diese Schalter jedoch in dem Fachmann geläufiger Weise als elektronische Schalter ausgebildet. Durch die Ablaufsteuerung 14 wird während jedes Referenz- bzw. Messzeitintervalls 22 bzw. 24 (Fig. 2) der zweite Schalter 20 und während jedes vor den Referenz- bzw. Messzeitintervallen liegenden Kompensations-Zeitintervalls 26 bzw. 28 der erste Schalter 18 geschlossen. Die Klemmschaltung 16 ist durch die Ablaufsteuerung 14 vor jedem Referenz-, Mess- und Kompensations-Zeitintervall im Sinne eines Anklemmens des Detektorsignals an eine Nullinie ansteuerbar, wie in Fig. 2 durch die Kurve 30 dargestellt ist. Durch die Ablaufsteuerung 14 ist nach jedem Referenzzeitintervall 22 und nach jedem Messzeitintervall 24 das Ausgangssignal des Integrators 10 oder eine Funktion desselben auf je eine Speicherschaltung 32 bzw. 34 aufschaltbar. Weiterhin ist der Integrator 10 durch die Ablaufsteuerung nach jeder Aufschaltung des Ausgangssignals auf eine der Speicherschaltung 32, 34 wieder auf Null rücksetzbar, wie durch Kurve 36 in Fig. 2 dargestellt ist.

Dem Detektor 12 ist ein Filter 38 nachgeschaltet, dessen Übertragungsfunktion invers zur Übertragungsfunktion des Detektors 12 ist.

Für einen auf Infrarotstrahlung ansprechenden pyroelektrischen Detektor weist das Filter 38 einen Operationsverstärker 40 mit einem nichtinvertierenden und einem invertierenden Eingang 42 bzw. 44 auf. Das Detektorsignal ist auf den nichtinvertierenden Eingang des Operationsverstärkers 40 geschaltet. Am Ausgang des Operationsverstärkers 40 liegt ein Spannungsteiler, der aus der Reihenschaltung zweier komplexer Widerstände besteht. Jeder dieser komplexen Widerstände wird von der Parallelschaltung je eines ohmschen Widerstandes 46 bzw. 48 und eines Kondensators 50 bzw. 52 gebildet. Die zwischen den komplexen Widerständen abgegriffene Spannung ist auf den invertierenden Eingang 44 des Operationsverstärkers 40 geschaltet.

Die Klemmschaltung 16 enthält einen Kondensator 54, über welchen der Ausgang 56 des Filters 38 auf den nichtinvertierenden Eingang 58 eines als Impedanzwandler wirkenden ersten Operationsverstärkers 60 geschaltet ist. Dabei ist der Ausgang 62 dieses Operationsverstärkers 60 mit dem invertierenden Eingang 64 verbunden. Der Ausgang des ersten Operationsverstärkers 60 ist über einen Widerstand 66 auf den invertierenden Eingang 68 eines zweiten Operationsverstärkers 70 geschaltet, dessen Ausgang 72 über einen weiteren Widerstand 74 mit dem invertierenden Eingang 68 verbunden und dessen nichtinvertierender Eingang 76 geerdet ist. Auf diese Weise erfolgt eine Verstärkung des von dem ersten Operationsverstärkers 60 erhaltenen Signals. Der Ausgang des zweiten Operationsverstärkers 70 ist über einen von der Ablaufsteuerung 14 gesteuerten Schalter 78 und einen Widerstand 80 mit dem Eingang 58 des ersten Operationsverstärkers verbindbar. Dabei erfolgt durch Schliessen des Schalters 78 eine Umladung des Kondensators 54 durch die verstärkte Spannung vom zweiten Operationsverstärker 70, bis die Spannung am ersten Operationsverstärker zu null wird. Das Ausgangssignal der Klemmschaltung 16 wird vom Ausgang 72 des zweiten Operationsverstärkers abgegriffen, wie durch Leitung 82 dargestellt ist.

Der Integrator 10 enthält einen Operationsverstärker 84, dessen Ausgang 86 über einen Kondensator 88 mit dem invertierenden Eingang 90 verbunden ist. Der nichtinvertierende Eingang 92 des Operationsverstärkers 84 ist geerdet. Der invertierende Eingang 90 ist über den ersten Schalter 18 und über einen ersten Widerstand 94 direkt mit dem Ausgang 82 der Klemmschaltung 16 und über den zweiten Schalter 20 mit dem Ausgang eines vom Ausgangssignal der Klemmschaltung 16 beaufschlagten invertierenden Verstärkers 96 verbunden. Der invertierende Verstärker 96 hebt die in der Klemmschaltung 16 erfolgende Inversion auf. Ein dritter, von der Ablaufsteuerung 14 gesteuerter Schalter 98 überbrückt zum Rücksetzen des Integrators 10 in Reihe mit einem Entladewiderstand 100 den Kondensator 88.

Dem Integrator 10 ist ein Logarithmierer 102 nachgeschaltet. Der Ausgang des Logarithmierers ist über einen vierten Schalter 104 auf die erste analoge Speicherschaltung 32 und über einen fünften Schalter 106 auf die zweite analoge Speicherschaltung 34 übertragbar, wobei der vierte und fünfte Schalter 104 bzw. 106 durch die Ablaufsteuerung nach jedem Referenz- bzw. Messzeitintervall 22 bzw. 24 kurzzeitig im schliessenden Sinne ansteuerbar sind.

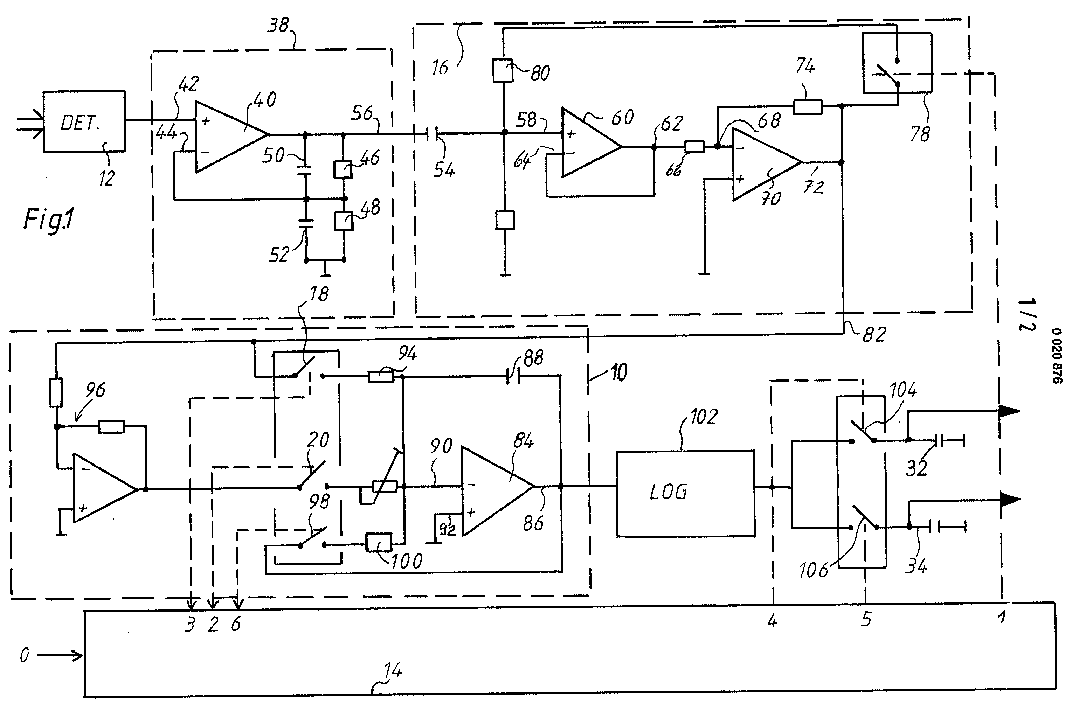

In Fig. 1 sind die verschiedenen Steuersignale, die von der Ablaufsteuerung abgegeben werden, mit «1», «2», «3», «4», «5» und «6» bezeichnet. Die entsprechenden Signalverläufe sind in Fig. 2 dargestellt.

Die beschriebene Signalverarbeitungsschaltung hat sich besonders bewährt in einem Bifrequenz-Photometer zur Bestimmung von Uranhexafluorid, wobei eine Absorptionsbande im mittel- bis langwelligen Infrarot benutzt wird und ein in diesem Bereich empfindlicher Detektor erforderlich ist, der die eingangs geschilderten Probleme mit sich bringt.

**Patentansprüche**

1. Signalverarbeitungsschaltung zur Verarbeitung des Ausgangssignals eines trägen und/ oder mit einem Gedächtniseffekt behafteten Detektors (12), der von einer Messgrösse beaufschlagt ist, die in periodisch aufeinanderfolgenden Mess- und Referenzzeitintervallen (24 bzw. 22) jeweils einen Mess- bzw. einen Referenzwert annimmt, mit

   a) einem rücksetzbaren Integrator (10) zur Integration des Ausgangssignals des Detektors (12) jeweils über jedes Mess- und jedes Referenzzeitintervall,

   b) einer ersten sowie einer zweiten mit dem Ausgang des Integrators (10) verbindbaren Speicherschaltung (32 bzw. 34),

   c) einer Ablaufsteuerung (14) zur Steuerung der Rücksetzung des Integrators (10) sowie der Verbindung der ersten bzw. zweiten Speicherschaltung (32 bzw. 34) mit dem Integrator,

dadurch gekennzeichnet, dass

   d) eine Klemmschaltung (16) vorgesehen ist, mit der das Ausgangssignal des Detektors (12) an eine Nullinie anklemmbar ist, bevor es dem Integrator (10) zugeführt wird,

   e) der Ausgang (72) der Klemmschaltung (16) mit dem Integrator (10) entweder direkt über einen ersten Schalter (18) oder über einen mit einem invertierenden Verstärker (96) in Reihe liegenden zweiten Schalter (20) verbindbar ist,

   f) die Ablaufsteuerung (14) zur Erzeugung folgender Steuersignale ausgebildet ist:

   (i) eines ersten Steuersignals (3) zum Schliessen des ersten Schalters (18) jeweils während der in zeitlichem Abstand aufeinanderfolgenden Mess- und Referenzzeitintervalle (24 bzw. 22),

   (ii) eines zweiten Steuersignals (2) zum Schliessen des zweiten Schalters (20) vor jedem Mess- und vor jedem Referenzzeitintervall jeweils für ein vorgegebenes Kompensationszeitintervall (26, 28),

(iii) eines dritten Steuersignals (1) zur Aktivierung der Klemmschaltung (16) jeweils vor jedem Mess-, jedem Referenz- und jedem Kompensationszeitintervall,

(iv) eines vierten Steuersignals (4, 5) zur Veranlassung der Übernahme des Ausgangssignals des Integrators (10) in die erste Speicherschaltung (32) nach jedem Messzeitintervall und in die zweite Speicherschaltung (34) nach jedem Referenzzeitintervall,

(v) eines fünften Steuersignals (6) zur Rücksetzung des Integrators (10) jeweils nach Übernahme seines Ausgangssignals in eine der Speicherschaltungen (32, 34).

2. Signalverarbeitungsschaltung nach Anspruch 1, dadurch gekennzeichnet, dass zwischen den Detektor (12) und die Klemmschaltung (16) ein Filter (38) geschaltet ist, dessen Übertragungsfunktion invers zur Übertragungsfunktion des Detektors (12) ist.

3. Signalverarbeitungsschaltung nach Anspruch 2 für einen auf Infrarotstrahlung ansprechenden pyroelektrischen Detektor, dadurch gekennzeichnet, dass

    a) das Filter (38) einen Operationsverstärker (40) mit einem nichtinvertierenden und einem invertierenden Eingang (42 bzw. 44) aufweist,

    b) das Detektorausgangssignal auf den nichtinvertierenden Eingang (42) des Operationsverstärkers (40) geschaltet ist,

    c) am Ausgang des Operationsverstärkers (40) ein Spannungsteiler liegt, der aus der Reihenschaltung zweier komplexer Widerstände besteht, wobei jeder dieser komplexen Widerstände von der Parallelschaltung je eines ohmschen Widerstandes (46, 48) und eines Kondensators (50, 52) gebildet ist, und

    d) die zwischen den komplexen Widerständen abgegriffene Spannung auf den invertierenden Eingang (44) des Operationsverstärkers (40) geschaltet ist.

4. Signalverarbeitungsschaltung nach Anspruch 2 oder 3, dadurch gekennzeichnet, dass

    a) die Klemmschaltung (16) einen Kondensator (54) enthält, über welchen der Ausgang (56) des Filters (38) auf den nichtinvertierenden Eingang (58) eines als Impedanzwandler wirkenden ersten Operationsverstärkers (60) geschaltet ist, wobei der Ausgang (62) dieses Operationsverstärkers (60) mit dem invertierenden Eingang (64) verbunden ist,

    b) der Ausgang (62) des ersten Operationsverstärkers (60) über einen Widerstand (66) auf den invertierenden Eingang (68) eines zweiten Operationsverstärkers (70) geschaltet ist, dessen Ausgang (72) über einen weiteren Widerstand (74) mit dem invertierenden Eingang (68) verbunden und dessen nichtinvertierender Eingang (76) geerdet ist, so dass eine Verstärkung des am ersten Operationsverstärkers (60) erhaltenen Signals erfolgt, und

    c) der Ausgang des zweiten Operationsverstärkers (70) über einen von der Ablaufsteuerung (14) gesteuerten weiteren Schalter (78) und einen Widerstand (80) mit dem Eingang (58) des ersten Operationsverstärkers (60) verbindbar ist,

wobei durch Schliessen des weiteren Schalters (78) eine Umladung des Kondensators (54) durch die verstärkte Spannung vom zweiten Operationsverstärker (70) erfolgt, bis die Spannung am ersten Operationsverstärker (60) zu null wird, und das Ausgangssignal der Klemmschaltung (16) vom Ausgang (72) des zweiten Operationsverstärkers (70) abgegriffen wird.

5. Signalverarbeitungsschaltung nach Anspruch 1, dadurch gekennzeichnet, dass

    a) der Integrator (10) einen weiteren Operationsverstärker (84) enthält, dessen Ausgang (86) über einen Kondensator (88) mit seinem invertierenden Eingang (90) verbunden und dessen nichtinvertierender Eingang (92) geerdet ist,

    b) der invertierende Eingang (90) des weiteren Operationsverstärkers (84) über den ersten Schalter (18) und einen ersten Widerstand (94) direkt mit dem Ausgang (82) der Klemmschaltung (16) und über den zweiten Schalter (20) mit dem Ausgang des vom Ausgangssignal der Klemmschaltung (16) beaufschlagten invertierenden Verstärkers (96) verbunden ist und

    c) ein dritter von der Ablaufsteuerung (14) gesteuerter Schalter (98) zum Rücksetzen des Integrators (10) in Reihe mit einem Entladewiderstand (100) den Kondensator (88) überbrückt.

6. Signalverarbeitungsschaltung nach einem der Ansprüche 1 bis 5, dadurch gekennzeichnet, dass dem Integrator (10) ein Logarithmierer (102) nachgeschaltet ist.

7. Signalverarbeitungsschaltung nach Anspruch 6, dadurch gekennzeichnet, dass der Ausgang des Logarithmierers (102) über einen vierten Schalter (104) auf eine die erste Speicherschaltung bildende analoge Speicherschaltung (32) und über einen fünften Schalter (106) auf eine die zweite Speicherschaltung (34) bildende analoge Speicherschaltung übertragbar ist, wobei der vierte und fünfte Schalter (104, 106) durch die Ablaufsteuerung (14) nach jedem Referenz- bzw. Messzeitintervall (22, 24) kurzzeitig im schliessenden Sinne ansteuerbar sind.

**Claims**

1. Signal processing circuit for processing the output signal of a detector (12) inert and/or subjected to a memory effect, to which a measuring quantity is applied, which assumes a measuring and a reference value, respectively, in measuring and reference time intervals (24 and 22, respectively) periodically consecutive, having

a) an integrator (10) adapted to be reset, for integrating the output signal from the detector (12) during each measuring and each reference time interval.

b) a first and a second memory circuit (32 and 34; respectively) adapted to be connected to the output of the integrator (10),

c) a sequence control (14) for controlling the resetting of the integrator (10) and the connection of the first and second memory circuits (32 and 34, respectively) to the integrator,

characterized in that

d) a clamp circuit (16) is provided, which is adapted to clamp the output signal from the detector (12) to a base line before it is supplied to the integrator (10),

e) the output (72) of the clamp circuit (16) is adapted to be connected to the integrator (10) either directly through a first switch (18) or through a second switch (20) serially arranged with an inverting amplifier (96),

f) the sequence control (14) is adapted to generate the following control signals:

(i) a first control signal (3) for closing the first switch (18) during the measuring and reference time intervals (24 and 22, respectively) following each other with time intervals therebetween,

(ii) a second control signal (2) for closing the second switch (20) before each measuring and each reference time interval for a predetermined compensation time interval (26, 28),

(iii) a third control signal (1) for energizing the clamp circuit (16) before each measuring, each reference and each compensation time interval,

(iv) a fourth control signal (4, 5) for causing the output signal from the integrator (10) to be transferred to the first memory circuit (32) after each measuring time interval and into the second memory circuit (34) after each reference time interval,

(v) a fifth control signal (6) for resetting the integrator (10) after its output signal has been transferred to one of the memory circuits (32, 34).

2. Signal processing circuit as set forth in claim 1, characterized in that a filter (38) is connected between the detector (12) and the clamp circuit (16), the transfer function of which filter (38) is inverse to the transfer function of the detector (12).

3. Signal processing circuit as set forth in claim 2 for a pyroelectrical detector responding to infrared radiation, characterized in that

a) the filter (38) has an operational amplifier (40) having a non-inverting and an inverting input (42 and 44, respectively),

b) the amplifier output signal is applied to the non-inverting input (42) of the operational amplifier (40),

c) a voltage divider is connected to the output of the operational amplifier (40), and consists of the series circuit of two complex resistors, each of these complex resistors being formed by the parallel circuit of an ohmic resistor (46, 48) and a capacitor (50, 52) and

d) the voltage picked-off between the complex resistors is applied to the inverting output (44) of the operational amplifier (40).

4. Signal processing circuit as set forth in claim 2 or 3, characterized in that

a) the clamp circuit (16) comprises a capacitor (54), through which the output (56) of the filter (38) is applied to the non-inverting input (58) of a first operational amplifier (60) acting as impedance transformer, the output (62) of this operational amplifier (60) being connected to the inverting input (64),

b) the output (62) of the first operational amplifier (60) is applied through a resistor (66) to the inverting input (68) of a second operational amplifier (70), the output (72) of which is connected through a further resistor (74) to the inverting input (68), and the non-inverting input (76) of which is earthed, such that the signal obtained at the first operational amplifier (60) is amplified, and

c) the output of the second operational amplifier (70) is arranged to be connected to the input (58) of the first operational amplifier (60) through a further switch (78) controlled by the sequence control (14) and through a resistor (80),

closing the second switch (78) causing recharging of the capacitor (54) by the amplified voltage from the second operational amplifier (70) until the voltage at the first operational amplifier (60) becomes zero and the output signal from the clamp circuit (16) is picked-off by the output (72) of the second operational amplifier (70).

5. Signal processing circuit as set forth in claim 1, characterized in that

a) the integrator (10) comprises a further operational amplifier (84) the output (86) of which is connected to its inverting input (90) through a capacitor (88), and the non-inverting input (92) of which is earthed,

b) the inverting input (90) of the further operational amplifier (84) is connected through the first switch (18) and a first resistor (94) directly to the output (82) of the clamp circuit (16) and through the second switch (20) to the output of the inverting amplifier (96) to which the output signal from the clamp circuit (16) is applied, and

c) a third switch (18) controlled by the sequence control (14) shunts the capacitor (88) in series with a discharge resistor (100) for resetting the integrator (10).

6. Signal processing circuit as set forth in anyone of the claims 1 to 5, characterized in that a logarithmizer (102) is connected to the output of the integrator (10).

7. Signal processing circuit as set forth in claim 6, characterized in that the output of the logarithmizer (102) is arranged to be transferred through a fourth switch (104) to an analog memory circuit (32) forming the first memory circuit, and to be transferred through a fifth switch (106) to an analog memory circuit forming the second memory circuit (34), the fourth and the fifth switches (104, 106) being arranged to be actuated by the sequence control (14) temporarily in the sense of closing, after each reference and measuring time intervals (22, 24), respectively.

**Revendications**

1. Circuit de traitement de signaux pour traiter le signal de sortie d'un détecteur (12) inerte et/ou affecté d'un effet mémoire, auquel est appliquée une grandeur de mesure qui prend respectivement une valeur de mesure et une valeur de référence dans des intervalles de temps de mesure et de référence (respectivement 24 et 22) périodiquement consécutifs, ayant

    a) un intégrateur (10) qui peut être remis à zéro, et qui est destiné à intégrer le signal de sortie du détecteur (12) pendant chaque intervalle de temps de mesure et chaque intervalle de temps de référence;

    b) un premier ainsi qu'un deuxième circuit de mémoire (respectivement 32 et 34) qui peuvent être liés à la sortie de l'intégrateur (10),

    c) une commande séquentielle (14) pour commander la remise à zéro de l'intégrateur (10) ainsi que la connexion respectivement du premier et du deuxième circuit de mémoire (respectivement 32 et 34) avec l'intégrateur,

caractérisé par le fait

    d) qu'un circuit de verrouillage (16) qui peut verrouiller le signal de sortie du détecteur (12) à une ligne de zéro avant qu'il soit amené à l'intégrateur (10), est prévu,

    e) que la sortie (72) du circuit de verrouillage (16) peut être liée à l'intégrateur (10), soit directement par l'intermédiaire d'un premier interrupteur (18), soit par l'intermédiaire d'un deuxième interrupteur (20) monté en série avec un amplificateur (96) invertissant,

    f) que la commande séquentielle (14) est formée pour engendrer les signaux de commande suivants:

    (i) un premier signal de commande (3) pour fermer le premier interrupteur (18) pendant chaque intervalle de temps de mesure et de référence (respectivement 24 et 22) consécutifs par intervalle,

    (ii) un deuxième signal de commande (2) pour fermer le deuxième interrupteur (20) avant chaque intervalle de temps de mesure et avant chaque intervalle de temps de référence, pour un intervalle de temps de compensation (26, 28) prédéterminé,

    (iii) un troisième signal de commande (1) pour activer le circuit de verrouillage (16) avant chaque intervalle de temps de mesure, chaque intervalle de temps de référence et chaque intervalle de temps de compensation,

    (iv) un quatrième signal de commande (4, 5) pour provoquer la réception du signal de sortie de l'intégrateur (10) dans le premier circuit de mémoire (32) après chaque intervalle de temps de mesure, et dans le deuxième circuit de mémoire (34) après chaque intervalle de temps de référence,

    (v) un cinquième signal de commande (6) pour remettre à zéro l'intégrateur (10) après chaque réception de son signal de sortie dans un des circuits de mémoire (32, 34).

2. Circuit de traitement de signaux selon la revendication 1, caractérisé par le fait qu'entre le détecteur (12) et le circuit de verrouillage (16) est intercalé un filtre (38) dont la fonction de transfert est inverse à la fonction de transfert du détecteur (12).

3. Circuit de traitement de signaux selon la revendication 2 pour un détecteur pyroélectrique répondant à des rayonnements infrarouges, caractérisé par le fait

    a) que le filtre (38) présente un amplificateur opérationnel (40) ayant une entrée non-invertissante et une entrée invertissante (respectivement 42 et 44),

    b) que le signal de sortie de détecteur est appliqué à l'entrée (42) non-invertissante de l'amplificateur opérationnel (40),

    c) qu'à la sortie de l'amplificateur opérationnel (40) se trouve un diviseur de tension qui est composé du montage en série de deux résistances complexes, chacune de ces résistances complexes étant formée du montage en parallèle de, respectivement, une résistance ohmique (46, 48) et un condensateur (50, 52), et

    d) que la tension captée entre les résistances complexes est appliquée à l'entrée (44) invertissante de l'amplificateur opérationnel (40).

4. Circuit de traitement de signaux selon la revendication 2 ou 3, caractérisé par le fait que

    a) le circuit de verrouillage (16) comporte un condensateur (54), par l'intermédiaire duquel la sortie (56) du filtre (38) est appliquée à l'entrée (58) non-invertissante d'un premier amplificateur opérationnel (60) jouant le rôle de transformateur d'adaptation d'impédance, la sortie (62) de cet amplificateur opérationnel (60) étant liée à l'entrée (64) invertissante,

    b) la sortie (62) du premier amplificateur opérationnel (60) est appliquée, par l'intermédiaire d'une résistance (66), à l'entrée (68) invertissante d'un deuxième amplificateur opérationnel (70) dont la sortie (72) est liée, par l'intermédiaire d'une autre résistance (74), à l'entrée (68) invertissante, et dont l'entrée (76) non-invertissante est mise à la terre de sorte que le signal obtenu au premier amplificateur opérationnel (60) est amplifié, et

c) la sortie du deuxième amplificateur opérationnel (70) peut être liée à l'entrée (58) du premier amplificateur opérationnel (60) par l'intermédiaire d'un autre interrupteur (78) commandé par la commande séquentielle (14) et d'une résistance (80),

un échange de charge du condensateur (54), en fermant l'autre interrupteur (78), s'effectuant par la tension amplifiée venant du deuxième amplificateur opérationnel (70) jusqu'à ce que la tension au premier amplificateur opérationnel (60) soit à zéro, et le signal de sortie du circuit de verrouillage (16) étant capté par la sortie (72) du deuxième amplificateur opérationnel (70).

5. Circuit de traitement de signaux selon la revendication 1, caractérisé par le fait

a) que l'intégrateur (10) comporte un autre amplificateur opérationnel (84) dont la sortie (86) est liée, par l'intermédiaire d'un condensateur (88) à son entrée (90) inversissante et dont l'entrée (92) non-inversissante est mise à la terre,

b) que l'entrée (90) inversissante de l'autre amplificateur opérationnel (84) est liée directement, par l'intermédiaire du premier interrupteur (18) et d'une première résistance (94), à la sortie (82) du circuit de verrouillage (16), et, par l'intermédiaire du deuxième interrupteur (20), à la sortie de l'amplificateur (96) invertissant auquel est appliqué le signal de sortie du circuit de verrouillage (16), et

c) qu'un troisième interrupteur (98) commandé par la commande séquentielle (14), chute le condensateur (88) en série avec une résistance de décharge (100), pour remettre l'intégrateur (10) à zéro.

6. Circuit de traitement de signaux selon une quelconque des revendications 1 à 5, caractérisé par le fait qu'un circuit (102) pour la formation de logarithmes est intercalé à la suite de l'intégrateur (10).

7. Circuit de traitement de signaux selon la revendication 6, caractérisé par le fait que la sortie du circuit (102) pour la formation de logarithmes peut être transférée, par l'intermédiaire d'un quatrième interrupteur (104), à un circuit de mémoire (32) analogique formant le premier circuit de mémoire, et, par l'intermédiaire d'un cinquième interrupteur (106), à un circuit de mémoire analogique formant le deuxième circuit de mémoire (34), le quatrième et le cinquième interrupteur (104, 106) pouvant être commandés momentanément dans le sens de la fermeture, par la commande séquentielle (14) aprés, respectivement, chaque intervalle de temps de référence et de mesure (22, 24).

Fig.1

Fig. 2